# EUROPEAN PATENT SPECIFICATION

(11) **EP 1 475 024 B1**
(45) Date of publication and mention of the grant of the patent: **17.08.2005**
(21) Application number: 04077023.2
(22) Date of filing: 13.11.2001
(51) Int. Cl.: A47J 43/046

(54) **Beverage mixer**
Getränkemixer
Melangeur de boisson

(30) Priority: 13.11.2000 US 248254 P
(43) Date of publication of application: 10.11.2004
(62) Divisional of application: 01990962.1
(73) Proprietor: Daniels, Thomas E. Jr., Sandy, UT 84093 (US)
(72) Inventor: Daniels, Thomas E. Jr., Sandy, UT 84093 (US)
(74) Representative: Gilmour, David Cedric Franklyn

(56) References cited:
- GB-A- 764 361
- US-A- 1 874 079
- US-A- 2 315 018
- US-A- 2 945 634
- US-A- 4 030 707
- US-A- 4 561 782

## Description

### BACKGROUND OF THE INVENTION

### 1. Field of the Invention.

The present invention relates generally to a beverage mixer, smoothie maker, blender, or the like. More particularly, the present invention relates to such a beverage mixer or smoothie maker configured to facilitate making beverages, such as smoothies, and including a stirring stick with a ball-and-socket type connection with a lid, a base with an alignment notch to receive a spout of a container to align the spout for pouring, an indentation formed in the base at the spout and alignment notch to receive a glass or cup, and a circular conical container.

### 2. Related Art.

Frozen, frosty, or icy drinks have become increasingly popular. Such drinks include the traditional shakes, and the more recently popular smoothies. Shakes, or milk shakes, are typically formed of ice-cream and/or milk, and flavored as desired, with or without additives, such as candies, chocolates, peanut butter, etc. Milkshakes typically are available at most fast-food restaurants, such as burger chains, and can be made by special machines, or hand-made using mixers.

Smoothies tend to be more healthy, and are formed of ice, frozen yogurt, and/or sorbet, and also can include additives such as fruit, berries, fruit juice, vitamins, etc. Smoothies typically are available from specialty chains or juice bars, and can be made with commercial or restaurant-grade blenders.

Such drinks also can be made at home, using a standard kitchen blender. One disadvantage with making such drinks, or utilizing blenders, is the difficulty in operating the blender, or the inadequacy of the blender. Blenders often get clogged or otherwise stalled by the drink ingredients. It is often necessary to supplement the blending by stirring the ingredients with a spoon or spatula. The spoon or spatula can get caught in the blades of the blender. In addition, using the spoon or spatula often requires removing the lid, thus increasing the chances for the ingredients to be expelled through the top of the container.

In addition, once the blending is completed, it is often necessary to remove the container from the blender and pour the contents into a drinking cup or glass. It will be appreciated that the container has an open top that is substantially larger than a typical drinking cup or glass. Thus, it is common for the contents to pour out of the wider opening of the container, and outside the narrower cup or glass, creating a mess to clean-up, and wasting the contents. The document US-2315018 discloses the preamble of claim 1.

### SUMMARY OF THE INVENTION

It has been recognized that it would be advantageous to develop a smoothie maker, beverage mixer, or the like, capable of facilitating the making of smoothies, frozen drinks, and the like. In addition, it has been recognized that it would be advantageous to develop such a mixer or the like that facilitates mixing and/or stirring of the contents. In addition, it has been recognized that it would be advantageous to develop such a mixer or the like that facilitates pouring or removing the contents.

The invention provides a smoothie maker, beverage mixer or the like with a container disposable on a base. The base includes a motor turning a drive mechanism extending therefrom. The container includes a mixing assembly rotatably disposed therein and engagable by the drive mechanism when the container is disposed on the base. A lid is removably disposed on the container, and has an opening therethrough.

In accordance with a more detailed aspect of the present invention, a stir stick advantageously is configured to be carried by the lid, and to be pivotable with respect to the lid when carried thereby. The stir stick extends through the opening in the lid and into the container. The stir stick advantageously includes a ball portion configured to be pivotally disposable over the opening of the lid, and to cooperate therewith to cover the opening and to allow the ball portion to pivot in the opening. The base can have a receptacle to receive the container.

In accordance with the present invention, a spout can be operatively coupled to the container to dispense contents thereof.

In accordance with another more detailed aspect of the present invention, an alignment indentation can be formed in the base and configured to receive the spout therein to align the spout with the base.

In accordance with another more detailed aspect of the present invention, a wall can be formed on the base proximate the alignment indentation. The wall can include an angled upper surface angled towards the alignment indentation to abut and guide the spout to the alignment indentation.

In accordance with the present invention, a cup indentation can be formed in the base to receive a cup under the spout.

In accordance with another more detailed aspect of the present invention, the container has a circular conical shape. Thus, the container advantageously can pivot or turn in the receptacle to align the spout with the alignment indentation.

In accordance with another more detailed aspect of the present invention, a bumper formed of a flexible material can be disposed on a lower end of the stir stick and located to contact an inner surface of the container when the stir stick is pivoted. Thus, the bumper advantageously can resist marring of the container.

Additional features and advantages of the invention will be apparent from the detailed description which follows, taken in conjunction with the accompanying drawings, which together illustrate, by way of example, features of the invention.

### BRIEF DESCRIPTION OF THE DRAWINGS

FIG. 1 is a partial broken away front view of a smoothie maker or beverage mixer in accordance with an embodiment of the present invention;
FIG. 2 is a cross sectional side view of the smoothie maker or beverage mixer of FIG. 1;
FIG. 3 is a top view of a base of the smoothie maker or beverage mixer of FIG. 1;
FIG. 4 is a top view of a container of the smoothie maker or beverage mixer of FIG. 1;

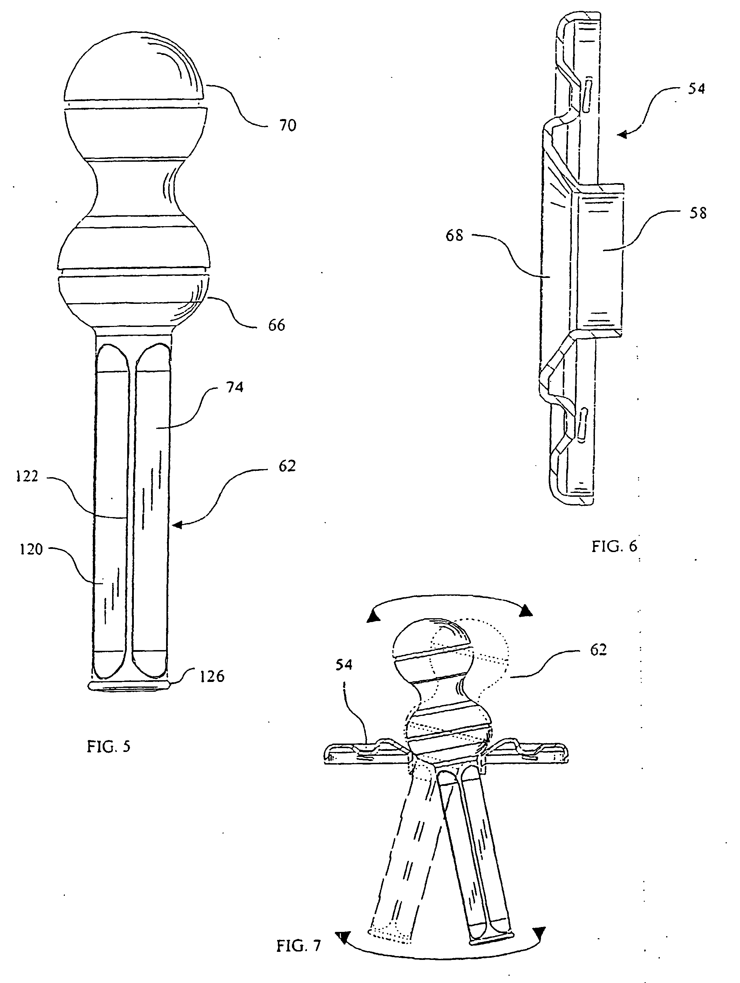

FIG. 5 is a side view of a stir stick of the smoothie maker or beverage mixer of FIG. 1;
FIG. 6 is a cross sectional side view of a lid of the smoothie maker or beverage mixer of FIG. 1; and
FIG. 7 is a schematic view of the stir stick pivoting with respect to the lid of the smoothie maker or beverage mixer of FIG. 1.

### DETAILED DESCRIPTION

Reference will now be made to the exemplary embodiments illustrated in the drawings, and specific language will be used herein to describe the same. It will nevertheless be understood that no limitation of the scope of the invention is thereby intended.

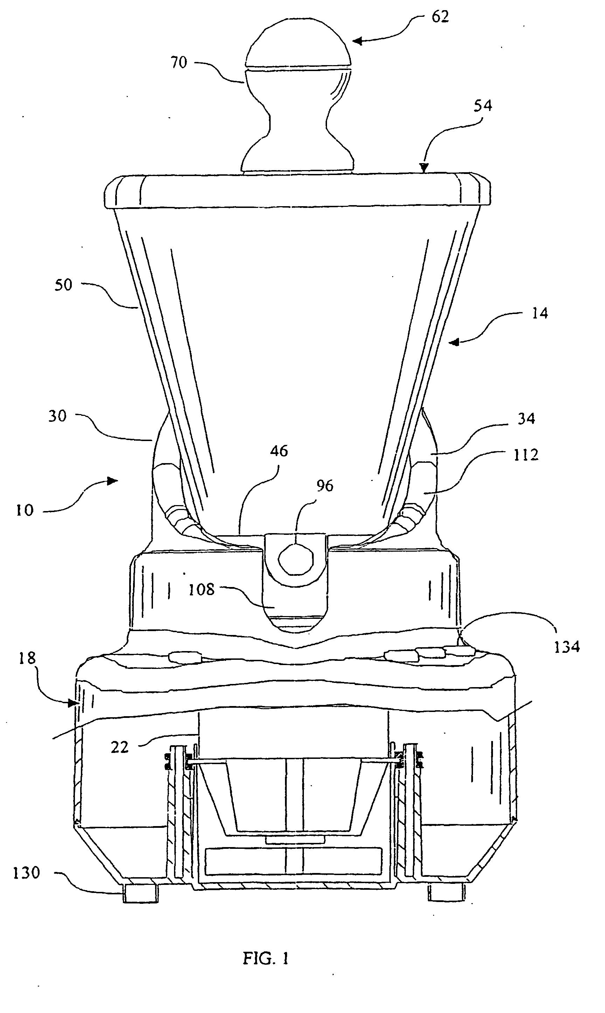

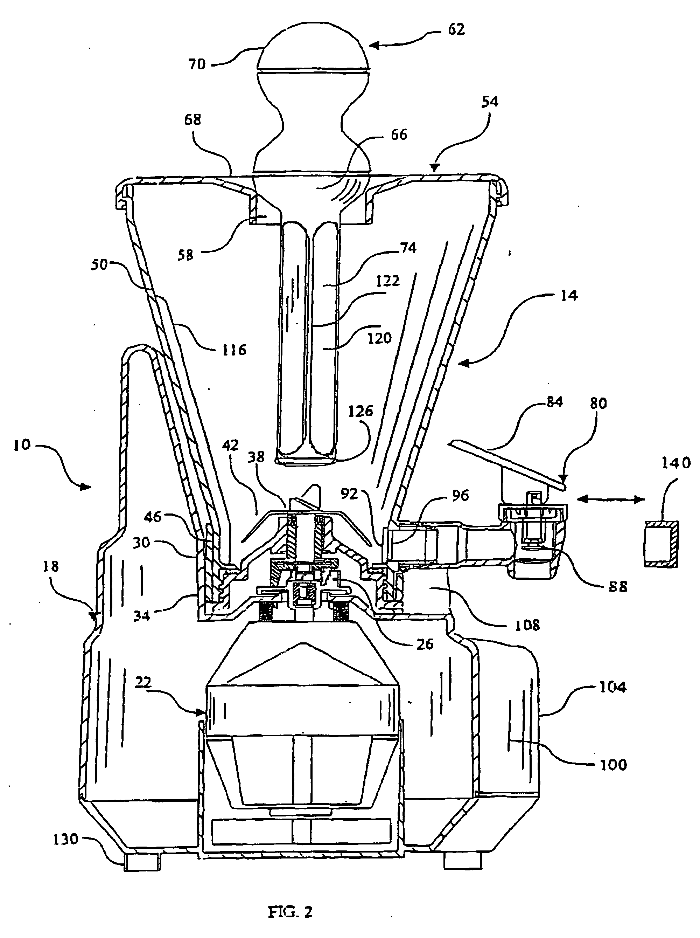

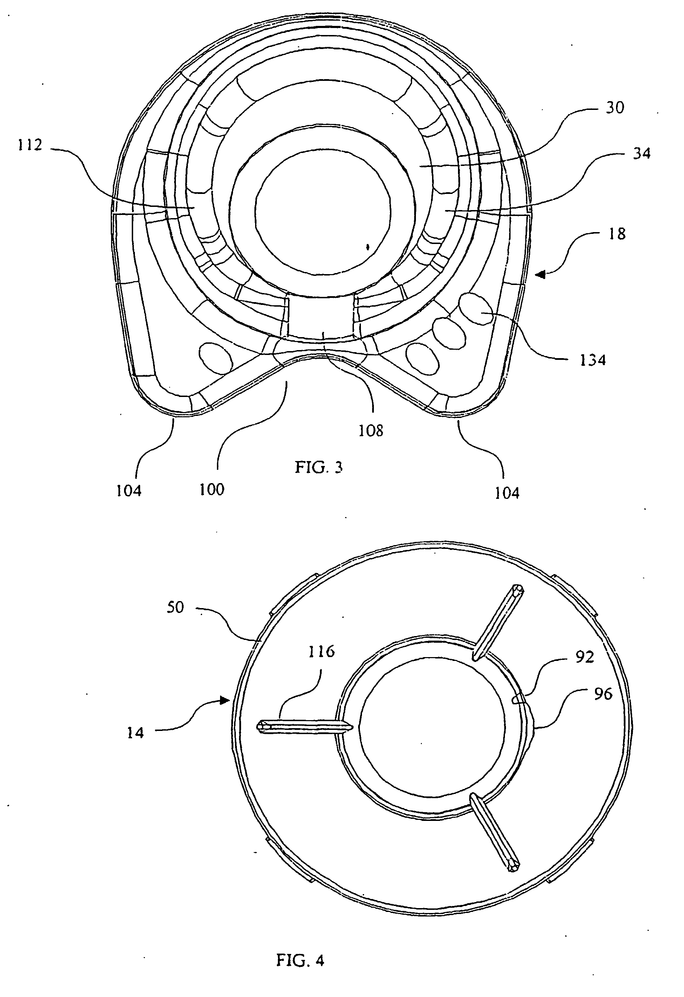

As illustrated in FIGs. 1-3, a smoothie maker, beverage mixer, or the like, indicated generally at 10, is shown in accordance with the present invention for making smoothies, frozen drinks, or the like. The smoothie maker or beverage mixer will be described below an illustrated with respect to a smoothie maker. It is of course understood that the present invention is equally applicable to beverage mixers and the like. Smoothies and frozen drinks are examples of a field that may benefit from use of such a smoothie maker 10. The smoothie maker 10 advantageously includes a stir stick operatively carried by a lid to facilitate stirring, a spout and cup indentation to facilitate pouring of the smoothie, and alignment structures to help align a spout of the container, as discussed in greater detail below.

The smoothie maker 10 can include a container or jar 14 removably disposable on a base or housing 18. Thus, the container 14 can be removed from the base 18 for cleaning, etc., while the base can include electrical components and the like. The base 18 includes a motor 22 capable of turning a drive mechanism 26 that extends from the base 18. In one aspect, the drive mechanism 26 can be located at a top of the base 18, and the container 14 is disposable on the top of the base 18, and on top of the drive mechanism 26. Thus, the container 14 can utilize gravity to help maintain the container 14 on the base 18.

A receptacle or socket 30 can be formed with the base 18 and configured to receive the container 14, or a portion thereof. The receptacle 30 can be formed on the top of the base 18 with the drive mechanism 26 disposed within the receptacle 30. The receptacle 30 can include a perimeter wall 34 to receive the container 14, or portion thereof, therein. In one aspect, the receptacle 30 can be circular, and the perimeter wall 34 can be an annular wall.

The container 14 includes a mixing assembly 38 that can include a plurality of blades 42 rotatably disposed in the container 14. The mixing assembly 38 can be engaged by the drive mechanism 26 of the base 18 when the container 14 is disposed on the base 18, or in the receptacle 30. For example, the drive mechanism 26 and the mixing assembly 38 can include mating or matching couplings, such as one or more intermeshing protrusions and indentations, so that the rotation and force of the motor 22 in the base can be transferred to the mixing assembly 38 or blades 42 in the container 14. A lower portion or bottom of the container 14 can be configured to mate or match the receptacle 30 to help maintain the container 14 on the base 18, and to properly align the mixing assembly 38 of the container 14 with the drive mechanism 26 of the base 18, or couplings thereof. Thus, the lower portion or bottom of the container 14 can be circular to match the circular shape of the receptacle 30.

The container 14 can include a base or bottom portion 46 secured to a container portion 50. The base or bottom portion 46 can be circular to match the circular shape of the receptacle 30 as described above. The base portion 46 of the container 14 can be removably secured to the container portion 50, such as by screw threads, so that the container 14 can be disassembled for cleaning. In addition, the mixing assembly 38 can be secured to the container 14 by the base portion 46, or between the base portion 46 and the container portion 50. Thus, the mixing assembly 38 also can be removably secured to the container. The mixing assembly 38 can cooperate with the base portion 46 to engage the drive mechanism 26 of the base 18.

The container portion 50 can be a hollow shell with an annular wall to receive ingredients therein. In one aspect, the container 14 or container portion 50 can be an inverted, circular, frusto-conical shell. The purpose of the circular shape is described in greater detail below. In addition, the container portion 50 or shell or wall can be transparent, or formed of a transparent material, to enable viewing the contents of the container 14. A top of the shell or container 14 can be open to receive ingredients therethrough, while the bottom of the shell can be open to receive the mixing assembly 38 so that the mixing assembly 38 or blades 42 can operatively engage the contents of the container 14. The base portion 46 can be configured as a cup to receive a bottom portion of the container portion 50 or shell therein, and to enclose the bottom of the container 14. Thus, the base portion 46 and container portion 50 form the container 14.

A lid 54 can be removably disposed on the container 14 to resist expulsion of the contents or the ingredients of the container during mixing, or while the blades 42 are rotating. The lid 54 can include an opening 58 therethrough. Thus, ingredients can be introduced into the container 14 either by removing the lid 54 and inserting the ingredients into the container 14, or by inserting the ingredients through the opening 58 in the lid.

A stir stick 62 advantageously is configured to be carried by the lid 54, and to cooperate with the lid 54, to allow the contents of the container 14 to be stirred with the stir stick 62, and/or to cover the opening 58 of the lid 54. The stir stick 62 can be extendable through the opening 58 in the lid 54 and into the container 14. In addition, the stir stick 62 can be pivotable with respect to the lid 54.

The stir stick 62 advantageously includes a bulbous or ball portion 66 pivotally disposable over the opening 58 of the lid 54. The lid 54 can include a conical or rounded indentation or socket 68 surrounding the opening 58 to receive the ball portion 66 of the stir stick 62. The ball portion 66 cooperates with the lid 54 to cover the opening 58 and to allow the ball portion 66 to pivot in the opening 58. Thus, the ball portion 66 of the stir stick 62 and the opening 58 in the lid 54 form a ball-and-socket type coupling. The ball portion 66 has a bulbous, spherical, semi-spherical, or rounded shape that slides smoothly in the opening 58 of the lid 54 as the stir stick 62 pivots in the container 14. In addition, the ball portion 66 limits the distance the stir stick 62 can be inserted into the container 14 to resist contact between the stir stick 62 and the mixing assembly 38 or blades 42. The lid 54 or opening 58 can be configured to match or mate with the ball portion 66.

The stir stick 62 also can include a handle portion 70 and a stir portion 74. The handle portion 70 is configured to extend above the lid 54, while the stir portion 74 is configured to extend below the lid 54, and into the container 14. The handle portion 70 can be configured to facilitate grasping. In one aspect, the handle portion 70 can have a bulbous, circular, or spherical shape that can be grasped by a user's hand.

The stir portion 74 can have a length that extends to a location above the mixing assembly 38 or blades 42, but without contacting the blades 42, to prevent damage. The length of the stir portion 74 and the ball portion 66 captured in the opening 58 of the lid 58 advantageously prevent the stir stick from reaching and interfering with the mixing assembly 38.

A spigot or spout 80 advantageously is operatively coupled to the container 14 at or near the bottom of the container 14. The spout 80 advantageously allows the contents of the container 14 to be dispensed through the spout 80, as opposed to being poured through the top of the container. The spout 80 can include any type of valve and/or actuation system. For example, the spout 80 can include a handle 84 for displacing a plunger type valve 88 within the spout 80. Thus, by lifting/depressing/turning the handle 84, the valve 88 is displaced allowing the contents of the container 14 to flow through the spout 80. The fluid pressure of the contents in the container 14 tends to force the contents out through the spout 80.

As the contents of the container 14 are dispensed, the fluid pressure decreases. Thus, it can be difficult to dispense the remaining contents of the container 14. A protrusion or wall 92 can be located adjacent an opening 96 in the container 14 for the spout 80. The protrusion or wall 92 can extend into the interior from the wall of the container 14. The protrusion or wall 92 can be located on the downstream side of the opening 96, or opposite the rotational direction of the blades 42, for directing the flow of the contents towards the opening 96, and thus out of the spout 80. Thus, the mixing assembly 38 or blades 42 can be actuated to create a centrifugal (centripetal) flow which forces the contents outwardly against the inner surface of the container 14, while the protrusion or wall 92 interrupts or blocks the flow, and directs the contents out of the opening 96 to the spout 80. Thus, a glass or cup may be disposed adjacent the base 18 and under the spout 80 to receive the contents of the container 14 when the spout 80 is operated.

The container 14 and base 18 advantageously are configured to facilitate dispensing the contents of the container 14 through the spout 80. A cup indentation 100 with protrusions 104 on either side can be formed in the base 14 to properly position a cup or glass under the spout 80 to resist spills. In addition, an alignment indentation 108 can be formed in the base 14 or the receptacle 30 to receive the spout 80 therein. The alignment indentation 108 can be located above the cup indentation 104 so that the spout 80 is positioned over the cup indentation 104 of the base 18 when the container 14 is disposed in the receptacle 30 on the base 18. The location of the spout 80 at the bottom of the container 14, and the wall 34 of the receptacle 30, prevent the container 14 from being properly disposed in the receptacle 30 and on the base 18, unless the spout 80 is aligned with the alignment indentation 108. Thus, as the container 14 is received in the receptacle 30 of the base 18, the spout 80 is received in the alignment indentation 108. In addition, the alignment indentation 108 and spout 80 can act to prevent the container 14 from rotating on the base 18 when the motor is operated.

The wall 34 of the receptacle 30 advantageously can include an angled upper surface 112 angled towards the alignment indentation 108. Thus, the wall 34 can have a smaller height proximate the alignment indentation 108, and a larger height distal from the alignment indention. In addition, the wall 34 can be arcuate or circular to surround the receptacle 30. Thus, if the container 14 is placed on the base 18 or in the receptacle 30 without being properly aligned, the spout 80 abuts the upper surface 112 of the wall 34, and is guided to the alignment indentation 108 by the angle of the wall 34. In one aspect, the wall 34 can extend entirely around the receptacle 30 in a continuous arc, with the most distal portion of the wall 34 having the greatest height, and decreasing in height towards the alignment indentation 108. The circular or arcuate shape of the wall 34 facilitates rotation of the container 14 in the receptacle 30 until the spout 80 is aligned with the alignment indentation 108.

As stated above, the container 14 can be circular to facilitate fitting within, and turning within, the circular wall 34 of the receptacle 30. The container wall or shell can have an inverted, circular, frusto-conical shape. In addition, it has been found that the circular, conical shape of the container 14 can impart a fast, vortex action to the contents or ingredients in the container 14 when the mixing assembly or blades are operated. It is believed that the circular conical shape of the container 14 contributes to the vortex action of the contents by having a natural shape of a whirlpool or vortex.

It has been found that the vortex action of the circular conical shape of the container, in conjunction with selective pivoting of the stir stick 62, can assist in mixing the contents. Rotating, or pivoting the stir stick 62, tends to disrupt the vortex and direct or drive ingredients downwardly. Thus, the circular conical shape of the container 14 facilitates a circular vortex flow, while the stir stick 62 facilitates directing ingredients vertically, and driving ingredients towards the blades.

In addition, protrusions 116 can extend inwardly from the wall of the container 14 to facilitate mixing or blending. The protrusions 116 cause a more turbulent flow as the contents or ingredients flow past the protrusions 116.

In addition, the stirring portion 74 of the stir stick 62 can be configured to facilitate stirring or mixing. The stirring portion 74 itself can be selectively manipulated or pivoted by the user to stir or mix the ingredients. In one aspect, the stirring portion 74 can include broad or wide fins 120, similar to a spatula, to push or move the ingredients as the stirring portion 74 is pivoted. In another aspect, the stirring portion 74 can include at least two fins 120 and 122 extending therefrom in transverse directions to a longitudinal axis of the stirring portion 74, and in transverse directions to one another, to facilitate stirring and mixing. Thus, the stirring portion 74 can have a cross section in the shape of a cross ("x") or plus ("+") shape. Therefore, as the stirring portion 74 is pivoted in a circular direction, a broad surface of at least one of the fins 120 or 122 will push against the ingredients.

In addition, the stir stick 62 or stirring portion 74 can merely extend into the container 14. The fins 120 and 122 can extend into the flow of the ingredients and cause more turbulent mixing, much like the protrusions 116 on the inner surface of the container 14.

A bumper 126 advantageously can be located on a lower end of the stir stick 62 to contact the inner surface or wall of the container 14 as the stir stick is pivoted. The bumper 126 can be formed of a flexible material to resist marring the container. It will be appreciated that repeated contact between two objects, such as the stir stick and container, can result in marring, and that can be unsightly, especially with a transparent or translucent container. Thus, as the user stirs the ingredients in the container 14 with the stir stick 62, the lower end may often strike the wall of the container 14, but the bumper 126 will resist marring.

In one aspect, the bumper 126 can be an o-ring. An annular indentation or groove can be formed in the lower end of the stir stick 62 or stirring portion 74 to receive the o-ring or bumper 126. The o-ring or bumper 126 can surround the lower end of the stirring portion 74.

As is known in the art, the base 18 can be configured to be disposed on a support surface, such as a counter or work surface. Feet or tabs 130 can be located on the bottom of the base 18 so that base 18 rests on the feet or tabs 130. The feet or tabs 130 can be formed of a high friction material, such as rubber or the like, to resist sliding or movement of the base during operation. In one aspect, the feet or tabs 130 can be located inwardly from a perimeter of the base 18, or with the alignment protrusions 108 extending outwardly past the feet or tabs 130. Thus, the base 18 can be positioned on the edge of the counter or work surface, so that the spout 80 and alignment protrusions 104 extend past the edge, so that a larger glass can be positioned under the spout 80 without interference from the counter or work surface.

In another aspect, the alignment protrusions 104 can extend outwardly from the base 14 to a location substantially at or near a vertical location of the spout 80, and the feet 130 can be located at the outer perimeter of the protrusions 104. Thus, the feet 130 and protrusions 104 can resist tipping of the smoothie maker 10 due to force, such as a downward force, exerted on the handle or the spout 80.

Controls or a control panel with buttons 134 for controlling the operation of the motor 18 or smoothie maker 10 also can be disposed on the base 18. As is known in the art, the controls or buttons 134 can be electrically coupled to the motor to control its operation. The buttons 134 can include an on/off button, speed control, etc.

In operation the lid 54 can be removed from the container 14 and ingredients for a smoothie or other frozen drink placed within the container 14. Alternatively, the lid 54 can remain on the container 14, and the ingredients can be inserted through the opening 58 of the lid 54, with the stir stick 90 removed therefrom. The container 14 may be disposed on the base 18 before the ingredients are placed in the container 14, or after. The mixing assembly 42 may be actuated, by operating the motor 22, in order to blend the ingredients within the container 14. In addition, a user may grasp the handle portion 78 of the stir stick 62, and pivot or rotate the stir stick, such that the stirring portion 74 of the stir stick facilitates moving and mixing the ingredients in the container 14. After the ingredients or contents are blended, a glass or cup may be placed under the spout 80,and in the cup or glass indentation 100. The handle of the spout 80 can be operated to dispense the contents from the container 14, through the spout 80, and into the cup or glass.

In accordance with another aspect of the present invention, the spout 80 can be a removable spout, or can be removably attached to the container 14 or bottom portion 46. For example, the spout 80 can threadably engage the container 14. A seal can be positioned between the spout 80 and the container 14 to resist leaking. A cap 140 can be removably attached to the container 14 or bottom portion 46 thereof to cover the opening 96 in the container 14 when the spout 80 is removed. Similarly, the cap 140 can threadably engage the container 14, and a seal can be positioned between the cap 140 and container 14 to resist leaking. Thus, the smoothie maker or beverage mixer 10 can be used in more of a food processing manner, or with more solid ingredients, such as nuts, with the spout 80 removed and the opening 96 covered by the cap 140. It will be appreciated that removing the spout 80 prevents the more solid ingredients from clogging the spout 80.

It is to be understood that the above-described arrangements are only illustrative of the application for the principles of the present invention. Numerous modifications and alternative arrangements can be devised without departing from the scope of the present invention and the appended claims are intended to cover such modifications and arrangements. Thus, while the present invention has been shown in the drawings and fully described above with particularity and detail in connection with what is presently deemed to be the most practical and preferred embodiment(s) of the invention, it will be apparent to those of ordinary skill in the art that numerous modifications can be made without departing from the scope of the invention as set forth in the claims.

## Claims

1. A beverage mixer, comprising:
a) a base (18) including a motor (22) for turning a drive mechanism (26) extending from the base;
b) a container (14) removably locatable on the base (18) and including a mixing assembly (38) rotatably disposed therein, the mixing assembly being engagable by the drive mechanism (26) when the container (14) is disposed on the base;
c) a lid (54) removably disposed on the container, having an opening (58);
d) a spout (80), operably coupled to the container (14) or to a bottom part or portion (46) connectable to the container (44) to dispense contents thereof said spout (80) including a valve (88) disposed on the spout (80) and operable to enable contents of the container to flow through the spout (80), **characterized in that** the beverage mixer comprises a cup-receiving indentation (100) formed in the base as part of the base configured or provided to provide a space to enable a cup to be readily received under the spout, the spout (80) being alignable with the cup-receiving indentation when the container is disposed on the base.

2. A beverage mixer as claimed in claim 1, further comprising:
a) a stir stick (62) configured to be carried by the lid (54), and extendable through the opening (58) in the lid (54) and into the container (14), and to be pivotable with respect to the lid when carried thereby;
b) the stir stick (62) including a ball portion being pivotally disposable over the opening of the lid to cooperate therewith to cover the opening and to allow the ball portion to pivot in the opening.

3. A beverage mixer in accordance with claims 1 or 2, wherein the spout has a proximal end operatively coupled to the container and extends therefrom to an opposite distal end, the outlet opening being positioned at the distal end; and wherein the actuator is positioned at the distal end of the spout.

4. A beverage mixer as claimed in any of claims 1 to 3, wherein the container has a conical shape of circular horizontal cross section.

5. A beverage mixer as claimed in any of claims 1 to 4, in which the spout is mounted in an aperture in the side wall of the container with its inlet end adjacent the periphery of the rotary mixing assembly (38).

6. A beverage mixer as claimed in claim 5, in which a protrusion or wall (92) is provided on the downstream side of the aperture in the wall (50) of the container so as, in use, to interrupt or block the flow of the container contents being mixed and direct such out of said opening (90) to the spout (80).

7. A beverage mixer as claimed in any of claims 1 to 6, further comprising a ridge, protruding from an inner surface of the container proximate an opening through the container to the spout, configured to guide contents of the container through the opening.

8. A beverage mixer as claimed in any of claims 1 to 7, further comprising an alignment indentation (108) formed on the base (18) configured to receive the spout (80) therein to align the spout (80) with the base (18).

9. A beverage mixer as claimed in claim 8, further comprising:
a wall, formed on the base proximate the alignment indentation, having an angled upper surface angled towards the alignment indentation to abut and guide the spout to the alignment indentation.

10. A beverage mixer as claimed in claim 8 or 9, in which the cup-receiving indentation (100) or space is formed in the base under the alignment indentation, configured such that, when assembled, the cup is received under the spout.

11. A beverage mixer as claimed in claim 8, in which the alignment indentation, aligns the spout with the cup indentation of the base.

12. A beverage mixer as claimed in claim 11, further comprising:
a wall formed on the base proximal the alignment indentation, having an angled upper surface angled towards the alignment indentation to abut and guide the spout to the alignment indentation.

13. A beverage mixer as claimed in claim 11 or 12, in which the alignment indentation is configured to receive the spout therein to align the spout with the cup-receiving indentation (100).

14. A beverage mixer as claimed in any of claims 1 to 13, in which the cup-receiving indentation (100) or space extends into the base under the outlet opening of the spout so that when the container is disposed on the base, a cup can be more conveniently placed adjacent the spout in the indentation at space and the length of the spout can be minimised.

15. A beverage mixer as claimed in any of claims 1 to 14, wherein the cup-receiving space or indentation (100) extending into the base (18) under the outlet opening of the spout, when the spout is located thereon, extends vertically downwardly without obstruction to a support surface and for receiving the cup so that when the container is disposed on the base and the base is supported on the support surface, the cup can be conveniently placed beneath the spout in the indentation space and rest on said support surface to receive liquid flow from the spout.

16. A beverage mixer as claimed in any of claims 1 to 15, further comprising means (104,130) carried by the base (18) or as part of the base (18) and disposed at or near the location of the spout (80) to resist tipping of the mixer when the valve (88) is operated to dispense contents from the container (14).

17. A beverage mixer as claimed in claim 16, in which the tipping resisting means (104,130) are protrusions extending outwardly from the base means and forming extensions of the cup-receiving indentation (100) to a position at or near on either side of a vertical location of the spout.

18. A beverage mixer as claimed in any of claims 1 to 17, in which the container (14) has at least one protrusion (116) extending inwardly from the inner surface of a wall of the container (14) to facilitate mixing or blending of the contents of the container.

19. A beverage mixer as claimed in any of claims 2 to 18, further comprising a rounded socket or indentation (68) formed around the opening (58) of the lid to cooperate with the ball portion of the stir stick to facilitate pivoting of the stir stick.

20. A beverage mixer as claimed in any of claims 1 to 19, including
means, including alignment means (108) on the base (18), configured to align the spout (80) with the base with the spout positioned over the cup indentation (100), and to prevent the container (14) from rotating on the base when the motor (22) is operated.

21. A beverage mixer as claimed in any of claims 1 to 20, in which the spout is mounted in an aperture in the side wall of the container or in the base or bottom part or portion (46) with its inlet end adjacent the peripheral path of the rotary mixing assembly (38) but outwardly thereof.

22. A beverage mixer as claimed in any of claims 1 to 21, in which a base or bottom part or portion (46) is detachably or removably secured to a container portion (50).

23. A beverage mixer as claimed in claim 22, in which the mixing assembly (38) is secured to the container (24) by the base portion (46) or is secured between the base portion (46) and the container portion (50).

24. A beverage mixer as claimed in claim 22 or 23, in which the mixing assembly (38) is secured to the container (14) by the base or bottom portion (46) or between the base portion (46) and the container portion (50) to engage the drive mechanism of the base (18).

25. A beverage mixer as claimed in any of claims 22 to 24, in which the spout (80) is attached to the container (14) or bottom portion (46).

26. A beverage mixer as claimed in any of claims 22 to 24, in which the spout (80) is removable or is removably attached.

27. A beverage mixer as claimed in any of claims 22 to 26 in which the container portion (50) is screwed into the base or bottom portion or part (46).

28. A beverage mixer as claimed in any of claims 20 to 27 in which a cap (140) may be removably attached to the container (14) or bottom portion (46) to cover the opening (96) when the spout is removed.

29. A beverage mixer as claimed in any of claims 1 to 15, in which the cup-receiving space is provided between two diverging projecting portions of the base and beneath the spout.

30. A beverage mixer as claimed in claim 29, in which the projecting portions are such as to also act to resist tipping of the mixer when the valve means (88) or handle means (84) is operated to displace contents from the container.

## Patentansprüche

1. Getränkemischmaschine, umfassend:
a) eine Basis (18) einschließlich eines Motors (22), der einen Antriebsmechanismus (26) dreht, der sich von der Basis weg erstreckt;
b) einen auf der Basis (18) entfernbar anordbaren Behälter (14), der eine drehbar darin angeordnete Mischanordnung (38) enthält, die vom Antriebsmechanismus (26) in Eingriff genommen werden kann, wenn der Behälter (14) auf der Basis angeordnet ist;
c) einen auf dem Behälter abnehmbar angeordneten Deckel (54) mit einer Öffnung (58);
d) eine operativ an den Behälter (14) oder an ein mit dem Behälter (44) verbindbares Unterteil oder unteren Abschnitt (46) gekoppelte Tülle (80) zum Abgeben von Inhalt aus diesem,
**dadurch gekennzeichnet, dass** die Getränkemischmaschine eine in der Basis als Teil der Basis ausgebildete Becherausnehmung (100) umfasst, die so konfiguriert oder vorgesehen ist, dass sie einen Raum schafft, der leicht unter der Tülle einen Becher aufnimmt,
wobei die Tülle (80) mit der Becherausnehmung ausrichtbar ist, wenn der Behälter auf der Basis angeordnet ist,
wobei die Tülle (80) ein an der Tülle (80) angeordnetes Ventil (88) umfasst, das so betätigbar ist, dass es erlaubt, dass Inhalt des Behälters durch die Tülle (80) fließt.

2. Getränkemischmaschine, nach Anspruch 1, weiter umfassend:
a) einen Umrühr-Stiel (62), der konfiguriert ist, um vom Deckel (54) gehalten zu sein, und der durch die Öffnung (58) im Deckel (54) in den Behälter (14) hineingesteckt und in Bezug zum Deckel gedreht werden kann, wenn er durch diesen gehalten wird; und wobei
b) der Umrühr-Stiel (62) ein im Wesentlichen kugelförmiges Teil enthält, das drehbar über der Öffnung des Deckels angeordnet werden kann, um mit diesem zusammenzuarbeiten, um die Öffnung zu bedecken, und zu erlauben, dass sich das Kugelteil in der Öffnung dreht..

3. Getränkemischmaschine, nach Anspruch 1 oder 2, wobei die Tülle mit einem proximalen Ende operativ an den Behälter gekoppelt ist und sich von diesem zu einem entgegen gesetzten distalen Ende erstreckt, wobei die Auslassöffnung an dem distalen Ende angeordnet ist; und wobei das Bedienungselement an dem distalen Ende der Tülle angeordnet ist.

4. Getränkemischmaschine, nach einem der Ansprüche 1 bis 3, wobei der Behälter eine konische Form mit einem kreisförmigen horizontalen Querschnitt aufweist.

5. Getränkemischmaschine, nach einem der Ansprüche 1 bis 4, wobei die Tülle in einer Öffnung in der Seitenwand des Behälters angebracht ist, mit ihrem Einlass nahe der Peripherie der drehbaren Mischanordnung (38).

6. Getränkemischmaschine, nach Anspruch 5, wobei eine Vorwölbung oder Wand (92) auf der stromab gelegenen Seite von der Öffnung in der Wand (50) des Behälters vorgesehen ist, um im Betrieb das Fließen des zu mischenden Inhalts des Behälters zu unterbrechen oder zu blockieren und diesen aus der Öffnung (90) zur Tülle (80) zu leiten.

7. Getränkemischmaschine, nach einem der Ansprüche 1 bis 6, weiter umfassend einen aus einer inneren Oberfläche des Behälters nahe einer Öffnung durch den Behälter zur Tülle herausragenden Rücken, der konfiguriert ist, um Inhalt des Behälters durch die Öffnung zu leiten.

8. Getränkemischmaschine, nach einem der Ansprüche 1 bis 7, weiter umfassend eine an der Basis (18) ausgebildete Ausrichtungsvertiefung (108), die so konfiguriert ist, dass sie die Tülle (80) aufnimmt, um die Tülle (80) mit der Basis (18) auszurichten.

9. Getränkemischmaschine nach Anspruch 8, weiter umfassend:
eine an der Basis nahe der Ausrichtungsvertiefung ausgebildete Wand mit einer abgewinkelten oberen Oberfläche, die in Richtung zu der Ausrichtungsvertiefung abgewinkelt ist, um an der Tülle anzuliegen und diese zu der Ausrichtungsverkiefung zu führen.

10. Getränkemischmaschine nach Anspruch 8 oder 9, wobei die Becherausnehmung (100) oder der Raum in der Basis unter der Ausrichtungsvertiefung ausgeformt und so konfiguriert ist, dass im zusammengesetzten Zustand ein Becher unter der Tülle aufgenommen wird.

11. Getränkemischmaschine nach Anspruch 8, wobei die Ausrichtungsvertiefung die Tülle auf die Becherausnehmung der Basis ausrichtet.

12. Getränkemischmaschine nach Anspruch 8, weiter umfassend:
eine an der Basis nahe der Ausrichtungsvertiefung ausgebildete Wand mit einer abgewinkelten oberen Oberfläche, die in Richtung zu der Ausrichtungsvertiefung abgewinkelt ist, um an der Tülle anzuliegen und diese zu der Ausrichtungsvertiefung zu führen.

13. Getränkemischmaschine nach Anspruch 11 oder 12, wobei die Ausrichtungsvertiefung konfiguriert ist, die Tülle darin aufzunehmen, um die Tülle auf die Becherausnehmung (100) auszurichten.

14. Getränkemischmaschine, nach einem der Ansprüche 1 bis 13, wobei sich die Becherausnehmung (100) oder der Raum in die Basis (18) unter der Auslassöffnung der Tülle erstreckt, so dass, wenn die Tülle auf der Basis angeordnet ist, ein Becher leichter nahe der Tülle in dem Raum der Ausnehmung platziert und die Länge der Tülle minimiert werden kann.

15. Getränkemischmaschine, nach einem der Ansprüche 1 bis 14, wobei sich der Raum oder die Ausnehmung zur Becheraufnahme (100), der bzw. die sich in die Basis (18) unter der Auslassöffnung der Tülle erstreckt, wenn die Tülle auf darauf angeordnet ist, ohne Hindernis vertikal nach unten hin zu einer Standfläche erstreckt, zum Aufnhmen des Bechers, so dass der Becher, wenn der Behälter auf der Basis angeordnet ist und die Basis auf der Standfläche steht, leicht unter der Tülle in dem Raum der Ausnehmung platziert und auf der Standfläche stehen kann, um den Fluss von Flüssigkeit aus der Tülle aufzunehmen.

16. Getränkemischmaschine, nach einem der Ansprüche 1 bis 15, weiter umfassend an der Basis (18) oder als Teil der Basis (18) am Ort oder nahe des Ortes der Tülle (80) angebrachte Mittel (104, 130) zum Verhindern des Kippens der Mischmaschine, wenn das Ventil (88) betätigt wird, um Inhalt aus dem Behälter (14) abzugeben.

17. Getränkemischmaschine nach Anspruch 16, wobei die Mittel (104, 130) zum Verhindern des Kippens Vorsprünge sind, die sich vom Basismittel nach außen erstrecken und Erweiterungen der Becherausnehmung (100) zu einem Ort an den oder nahe der Seiten einer vertikalen Anordnung der Tülle bilden.

18. Getränkemischmaschine nach einem der Ansprüche 1 bis 17, wobei der Behälter (14) wenigstens einen Vorsprung (116) aufweist, der sich von der inneren Oberfläche einer Wand des Behälters (14) nach innen erstreckt, um das Mischen oder Umrühren des Inhalts des Behälters zu erleichtern.

19. Getränkemischmaschine nach einem der Ansprüche 2 bis 18, weiter umfassend eine um die Öffnung (58) des Deckels herum gebildete gerundete Fassung oder Vertiefung (68) zum Zusammenwirken mit dem Kugelteil des Umrühr-Stiels zum Erleichtern des Drehens des Umnühr-Stiels.

20. Getränkemischmaschine nach einem der Ansprüche 1 bis 19, weiter umfassend Mittel, einschließlich Ausrichtungsmittel (108) an der Basis (18), die konfiguriert sind, die Tülle (80) so mit der Basis auszurichten, dass die Tülle über der Becherausnehmung (100) positioniert ist, und zum Verhindern, dass sich der Behälter (14) auf der Basis (18) dreht, wenn der Motor (22) betätigt wird.

21. Getränkemischmaschine nach einem der Ansprüche 1 bis 20, wobei die Tülle in einer Öffnung in der Seitenwand des Behälters oder in der Basis oder dem Unterteil (46) angebracht ist, mit ihrem Einlass nahe jedoch außerhalb der Peripherie der drehbaren Mischanordnung (38).

22. Getränkemischmaschine nach einem der Ansprüche 1 bis 21, wobei eine Basis oder ein Unterteil (46) abnehmbar oder entfernbar an einem Behälterabschnitt (50) angeordnet ist.

23. Getränkemischmaschine nach Anspruch 22, wobei die Mischanordung (38) durch den Basisabschnitt (46) an dem Behälter (24) angebracht ist oder zwischen dem Basisabschnitt (46) und dem Behälterabschnitt (50) angebracht ist.

24. Getränkemischmaschine nach Anspruch 22 oder 23, wobei die Mischanordung (38) durch den Basis- oder Unterabschnitt (46) an dem Behälter (24) angebracht ist oder zwischen dem Basisabschnitt (46) und dem Behälterabschnitt (50) angebracht ist, um mit dem Antriebsmechanismus der Basis (18) in Eingriff zu stehen.

25. Getränkemischmaschine nach Anspruch 22 bis 24, wobei die Tülle (80) an dem Behälter (14) oder dem Unterabschnitt (46) angebracht ist.

26. Getränkemischmaschine nach Anspruch 22 bis 24, wobei die Tülle (80) entfernbar oder entfernbar angebracht ist.

27. Getränkemischmaschine nach Anspruch 22 bis 24, wobei der Behälterabschnitt (50) angebracht in die Basis oder den Unterabschnitt (46) verschraubt ist.

28. Getränkemischmaschine nach Anspruch 20 bis 27, wobei ein Kappe (140) entfernbar an dem Behälter (14) oder Unterabschnitt (46) angebracht sein kann, um die Öffnung (96) zu verschließen, wenn die Tülle entfernt wird.

29. Getränkemischmaschine nach Anspruch 1 bis 15, wobei die Raum zur Aufnahme eines Bechers zwischen zwei divergierenden vorstehenden Abschnitten der Basis und unter der Tülle vorgesehen ist.

30. Getränkemischmaschine nach Anspruch 34, wobei die vorstehenden Abschnitte gleichzeitig bewirken, dass die Mischmaschine am Kippen gehindert wird, wenn das Ventil (88) oder das Griffmittel (84) betätigt wird, um Inhalt aus dem Behälter abzugeben.

## Revendications

1. Mélangeur de boissons, comprenant :
a) une base (18) comportant un moteur (22) pour faire tourner un mécanisme d'entraînement (26) s'étendant à partir de la base ;
b) un conteneur (14) pouvant être placé de façon amovible sur la base (18) et comportant un ensemble de mélange (38) disposé à rotation à l'intérieur, l'ensemble mélangeur pouvant être engagé par le mécanisme d'entraînement (26) lorsque le conteneur (14) est disposé sur la base ;
c) un couvercle (54) placé de façon amovible sur le conteneur, présentant une ouverture (58) ;
d) un bec verseur (80), couplé fonctionnellement au conteneur (14) ou à une partie de fond ou partie (46) pouvant être connectée au conteneur (44) afin de verser son contenu, ledit bec verseur (80) comportant une vanne (88) disposée sur le bec verseur (80) et pouvant agir pour permettre au contenu du conteneur de s'écouler par le bec verseur (80), **caractérisé en ce que** le mélangeur de boissons comprend une découpe de réception de tasse (100) formée dans la base comme faisant partie de la base configurée ou prévue pour fournir un espace afin de permettre à une tasse d'être facilement reçue sous le bec verseur, le bec verseur (80) pouvant s'aligner avec la découpe de réception de tasse lorsque le conteneur est disposé sur la base.

2. Mélangeur de boissons selon la revendication 1 comprenant, de plus :
a) une tige d'agitation (62) configurée pour être portée par le couvercle (54), et pouvant s'étendre à travers l'ouverture (58) du couvercle (54) et dans le conteneur (14), et pour pouvoir pivoter par rapport au couvercle lorsqu'elle est portée par lui ;
b) la tige d'agitation (62) comportant une partie en forme de boule pouvant être disposée à pivotement sur l'ouverture du couvercle pour coopérer avec lui afin de couvrir l'ouverture et de permettre à la partie en forme de boule de pivoter dans l'ouverture.

3. Mélangeur de boissons selon les revendications 1 ou 2, dans lequel le bec verseur possède une extrémité proximale couplée fonctionnellement au conteneur et s'étend à partir de là vers une extrémité distale opposée, l'ouverture de sortie étant positionnée au niveau de l'extrémité distale ; et dans lequel l'actionneur est placé au niveau de l'extrémité distale du bec verseur.

4. Mélangeur de boissons selon l'une quelconque des revendications 1 à 3, dans lequel le conteneur présente une configuration conique de section transversale horizontale circulaire.

5. Mélangeur de boissons selon l'une quelconque des revendications 1 à 4 dans lequel le bec verseur est monté dans une ouverture de la paroi latérale du conteneur, son extrémité d'entrée se trouvant adjacente à la périphérie de l'ensemble de mélange rotatif (38).

6. Mélangeur de boissons selon la revendication 5 dans lequel une partie en saillie ou paroi (92) est fournie sur le côté aval de l'ouverture dans la paroi (50) du conteneur de façon à interrompre ou à bloquer, lors de l'utilisation, l'écoulement du contenu du conteneur mélangé et dirigé de la sorte hors de ladite ouverture (90) vers le bec verseur (80).

7. Mélangeur de boissons selon l'une quelconque des revendications 1 à 6 comprenant, de plus, une nervure en saillie à partir d'une surface interne du conteneur à proximité d'une ouverture à travers le conteneur vers le bec verseur, configurée pour guider le contenu du conteneur à travers l'ouverture.

8. Mélangeur de boissons selon l'une quelconque des revendications 1 à 7 comprenant, de plus, une découpe d'alignement (108) formée sur la base (18) configurée pour y recevoir le bec verseur (80) afin d'aligner le bec verseur (80) avec la base (18).

9. Mélangeur de baissons selon la revendication 8 comprenant, de plus :
une paroi, formée sur la base à proximité de la découpe d'alignement, présentant une surface supérieure inclinée vers la découpe d'alignement pour venir en butée et guider le bec verseur vers la découpe d'alignement.

10. Mélangeur de boissons selon la revendication 8 ou 9, dans laquelle la découpe ou l'espace de réception de tasse (100) est formé(e) dans la base sous la découpe d'alignement, configurée de telle sorte que, lors de l'assemblage, la tasse est reçue au-dessous du bec verseur.

11. Mélangeur de boissons selon la revendication 8 dans lequel la découpe d'alignement met en alignement le bec verseur avec la découpe de tasse de la base.

12. Mélangeur de boissons selon la revendication 11 comprenant, de plus :
une paroi formée sur la base à proximité de la découpe d'alignement, présentant une surface supérieure inclinée vers la découpe d'alignement pour venir en butée et guider le bec verseur vers la découpe d'alignement.

13. Mélangeur de boissons selon la revendication 11 ou 12 dans lequel la découpe d'alignement est configurée pour y recevoir le bec verseur en vue d'aligner le bec verseur avec la découpe de réception de tasse (100).

14. Mélangeur de boissons selon l'une quelconque des revendications 1 à 13 dans lequel la découpe ou l'espace de réception de tasse (100) s'étend dans la base sous l'ouverture de sortie du bec verseur de façon que, lorsque le conteneur est disposé sur la base, une tasse puisse être plus facilement placée de façon adjacente au bec verseur dans la découpe ou l'espace et que la longueur du bec verseur puisse être réduite.

15. Mélangeur de boissons selon l'une quelconque des revendications 1 à 14 dans lequel l'espace ou la découpe de réception de tasse (100) s'étendant dans la base (18) sous l'ouverture de sortie du bec verseur, lorsque le bec verseur est placé au-dessus d'elle, se prolonge verticalement vers le bas sans obstruer une surface de support et pour recevoir la tasse de façon que, lorsque le conteneur est disposé sur la base et que la base est supportée par la surface de support, la tasse puisse être commodément placée au-dessous du bec verseur dans l'espace de découpe et repose sur ladite surface de support pour recevoir le flux liquide provenant du bec verseur.

16. Mélangeur de boissons selon l'une quelconque des revendications 1 à 15, comprenant, de plus, des moyens (104, 130) portés par la base (18) ou faisant partie de la base (18) et disposés au niveau ou près de l'emplacement du bec verseur (80) pour résister au basculement du mélangeur lorsque la vanne (88) est actionnée pour verser le contenu sortant du conteneur (14).

17. Mélangeur de boissons selon la revendication 16 dans lequel les moyens de résistance au basculement (104, 130) sont des parties en saillie s'étendant vers l'extérieur à partir des moyens de base et formant des prolongement de la découpe de réception de tasse (100) vers une position située au niveau ou près de chaque côté d'une position verticale du bec verseur.

18. Mélangeur de boissons selon l'une quelconque des revendications 1 à 17 dans lequel le conteneur (14) comporte au moins une partie en saillie (116) s'étendant vers l'intérieur à partir de la surface interne d'une paroi du conteneur (14) pour faciliter le mixage ou le mélange du contenu du conteneur.

19. Mélangeur de boissons selon l'une quelconque des revendications 2 à 18 comprenant, de plus, une cavité ou une découpe de forme arrondie (68) formée autour de l'ouverture (58) du couvercle pour coopérer avec la partie en forme de boule de la tige d'agitation pour faciliter le pivotement de la tige d'agitation.

20. Mélangeur de boissons selon l'une quelconque des revendications 1 à 19, comportant des moyens incluant des moyens d'alignement (108) sur la base (18), configurés pour aligner le bec verseur (80) avec la base, le bec verseur étant placé au-dessus de la découpe de réception de tasse (100) et pour empêcher le conteneur (14) de tourner sur la base lorsque le moteur (22) est actionné.

21. Mélangeur de boissons selon l'une quelconque des revendications 1 à 20 dans lequel le bec verseur est monté dans une ouverture de la paroi latérale du conteneur ou dans une partie ou portion (46) de la base ou du fond, son extrémité d'entrée étant adjacente au parcours périphérique de l'ensemble de mélange rotatif (38) mais à l'extérieur de celui-ci.

22. Mélangeur de boissons selon l'une quelconque des revendications 1 à 21 dans lequel une partie de base ou portion (46) ou de fond est fixée, de façon détachable ou amovible, à une partie de conteneur (50).

23. Mélangeur de boissons selon la revendication 22 dans lequel l'ensemble de mélange (38) est fixé au conteneur (24) par la partie de base (46) ou est fixé entre la partie de base (46) et la partie de conteneur (50).

24. Mélangeur de boissons selon la revendication 22 ou 23 dans lequel l'ensemble de mélange (38) est fixé au conteneur (14) par la partie de base ou de fond (46) ou entre la partie de base (46) et la partie de conteneur (50) pour engager le mécanisme d'entraînement de la base (18).

25. Mélangeur de boissons selon l'une quelconque des revendications 22 à 24 dans lequel le bec verseur (80) est fixé au conteneur (14) ou à la partie de fond (46).

26. Mélangeur de boissons selon l'une quelconque des revendications 22 à 24 dans lequel le bec verseur (80) est amovible ou est fixé de façon amovible.

27. Mélangeur de boissons selon l'une quelconque des revendications 22 à 26 dans lequel la partie de conteneur (50) est vissée dans la partie ou portion de base ou de fond (46).

28. Mélangeur de boissons selon l'une quelconque des revendications 20 à 27 dans lequel un capuchon (140) peut être fixé de façon amovible au conteneur (14) ou à la partie de fond (46) pour couvrir l'ouverture (96) lorsque le bec verseur est enlevé.

29. Mélangeur de boissons selon l'une quelconque des revendications 1 à 15 dans lequel l'espace de réception de tasse est prévu entre deux parties en saillie divergentes de la base et au-dessous du bec verseur.

30. Mélangeur de boissons selon la revendication 29 dans lequel les parties en saillie se présentent de telle façon qu'elles agissent également pour résister au basculement du mélangeur lorsque les moyens de vanne (88) ou les moyens de poignée (84) sont actionnés pour déplacer le contenu du conteneur.
